(19) Europäisches Patentamt / European Patent Office / Office européen des brevets

(11) **EP 2 813 046 B1**

(12) **EUROPEAN PATENT SPECIFICATION**

(45) Date of publication and mention of the grant of the patent:
**16.10.2019 Bulletin 2019/42**

(21) Application number: **12708259.2**

(22) Date of filing: **08.02.2012**

(51) Int Cl.:
***H04L 29/06*** (2006.01)

(86) International application number:
**PCT/EP2012/052135**

(87) International publication number:
**WO 2013/117224 (15.08.2013 Gazette 2013/33)**

(54) **SYSTEM AND METHOD FOR DETERMINING A REPUTATION MECHANISM**

SYSTEM UND VERFAHREN ZUR BESTIMMUNG EINES REPUTATIONSMECHANISMUS

SYSTÈME ET PROCÉDÉ POUR DÉTERMINER UN MÉCANISME DE RÉPUTATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.12.2014 Bulletin 2014/51**

(73) Proprietor: NEC Corporation
Tokyo 108-8001 (JP)

(72) Inventors:
- **DÓLERA TORMO, Ginés**
  **69121 Heidelberg (DE)**
- **GÓMEZ MÁRMOL, Félix**
  **E-30.011 Murcia (ES)**

(74) Representative: **Patent- und Rechtsanwälte Ullrich & Naumann PartG mbB Schneidmühlstrasse 21 69115 Heidelberg (DE)**

(56) References cited:
**US-B2- 7 937 480**

- **ISAAC AGUDO ET AL: "A Multidimensional Reputation Scheme for Identity Federations", 10 September 2009 (2009-09-10), PUBLIC KEY INFRASTRUCTURES, SERVICES AND APPLICATIONS, SPRINGER BERLIN HEIDELBERG, BERLIN, HEIDELBERG, PAGE(S) 225 - 238, XP019154564, ISBN: 978-3-642-16440-8 abstract 1. Introduction 4. Federated Reputation System**
- **SABATER-MIR ET AL: "On representation and aggregation of social evaluations in computational trust and reputation models", INTERNATIONAL JOURNAL OF APPROXIMATE REASONING, ELSEVIER SCIENCE, NEW YORK, NY, US, vol. 46, no. 3, 15 November 2007 (2007-11-15), pages 458-483, XP022346007, ISSN: 0888-613X, DOI: 10.1016/J.IJAR.2006.12.013**
- **PHILLIP J. WINDLEY ET AL: "Using reputation to augment explicit authorization", PROCEEDINGS OF THE 2007 ACM WORKSHOP ON DIGITAL IDENTITY MANAGEMENT , DIM '07, 1 January 2007 (2007-01-01), page 72, XP55037844, New York, New York, USA DOI: 10.1145/1314403.1314416 ISBN: 978-1-59-593889-3 cited in the application**
- **FÉLIX GÓMEZ MÁRMOL ET AL: "Towards pre-standardization of trust and reputation models for distributed and heterogeneous systems", COMPUTER STANDARDS & INTERFACES, vol. 32, no. 4, 1 June 2010 (2010-06-01), pages 185-196, XP55037846, ISSN: 0920-5489, DOI: 10.1016/j.csi.2010.01.003 cited in the application**

**Description**

The invention relates to a system for determining a reputation mechanism and to a method for determining a reputation mechanism.

Trust and reputation management systems are nowadays widely spread and used in the internet to analyze if certain sources, for example an information provider or the like, are trustworthy, based on experiences of other users, providers, etc.. Such trust or reputation management systems may also be used to determine spam. Other application areas for reputation management systems are ranging from e-commerce ones to blogs, social networks, video streaming services, etc. as well as P2P networks, wireless sensor networks, vehicular ad-hoc networks, cloud computing, identity management systems, collaborative intrusion detection networks, etc..

U.S. 7,937,480 B2 shows a method and a system for operation upon one or more data processors for aggregating reputation data from dispersed reputation engines and for deriving global reputation information. A centralized reputation engine receives feedback from a plurality of local reputation engines, wherein each of the local reputation engines is being operable to determine local reputations based upon of one or more entities and associated with the local reputation engines. An aggregation engine is operable to derive a global reputation for a queried entity based upon an aggregation of the plurality of local reputations. The centralized reputation engine receives reputation queries from one or more of the local reputation engines and applies a local reputation bias to the global reputation based on preferences of the local reputation engine to generate a local reputation for the local reputation engine from the global reputation.

The non-patent literature "Using Reputation to Augment Explicit Authorization" of Philip J. Windley, Devlin Daley, Bryant Cutler and Kevin Tew in the document "proceedings of the 2007 ACN workshop and digital IT management", ACN, 2007, pp. 271-281, section 4.2.2 shows a model with which a reputation of users may be calculated in a personalized manner using a customizable reputation engine respectively computation engine. The computation is performed on the basis of a certain rule language for the computation engine.

The non-patent literature "Towards Pre-Standardization of Trust and Reputation Models for Distributed and Heterogeneous Systems" of Félix Gomez Mármol and Gregorio Martinez Perez, in Computer Standards & Interfaces 32 (2010) pp 185-196 shows different trust and reputation models. All of these models shown therein have certain key processes in common such as scoring, ranking, rewarding, punishing or gathering behavioral information.

However, the aforementioned trust and reputation systems are unflexible, since they are restricted to a certain system although adaptable to this certain system by parameters.

It is therefore an objective of the present invention to provide a system and a method for determining a reputation mechanism which are more flexible. It is a further objective of the present invention to provide a system and a method for determining a reputation mechanism which enable an easy adaption to different systems or system scenarios. It is an even further objective of the present invention to provide a system and a method for determining a reputation mechanism which are more adequate.

In accordance with the invention the aforementioned objectives are accomplished by the system of claim 1 and the method of claim 8.

According to the invention it has first been recognized that the system according to claim 1 and the method according to claim 8 are less rigid and more flexible when computing reputation scores. It has further been first recognized that the system according to claim 1 and the method according to claim 8 allow a dynamic adaption to the current circumstances of the system. It has even further been first recognized, that the system according to claim 1 and the method according to claim 8 provide a very flexible mechanism to select the most appropriate trust and reputation model to apply at each moment considering current system conditions and/or performance conditions.

Further features, advantages and preferred embodiments of the present invention are to be found in the subclaims of claim 1 respectively claim 8.

There are several ways how to design and further developed the teaching of the present invention in an advantageous way. To this end it is to be referred to the patent claim subordinate to patent claim 1 and 8 on the one hand and the following explanation of preferred embodiments of the invention by way of example illustrating by the drawing on the other hand. In connection with the explanation of the preferred example of an embodiment of the invention by the aid of the drawing, generally preferred embodiments and further developments of the teaching will be explained. In the drawings

Fig. 1       shows a schematic view of a system according to a first embodiment;

Fig. 2       shows examples of fuzzy sets to represent system conditions and performance measurements of a system according to a second embodiment;

Fig. 3       shows reputation engine selection probabilities;

Fig. 4a, 4b   show a transition from a first reputation engine to a second reputation engine;

Fig. 5       shows an adaption of weighing coefficients during a transition time;

Fig. 6       shows a system according to a second embodiment;

Fig. 7a      shows different reputation mechanisms in different reputation engines with system condition analysis;

Fig. 7b      shows different reputation mechanisms in different reputation engines with performance measurement analysis.

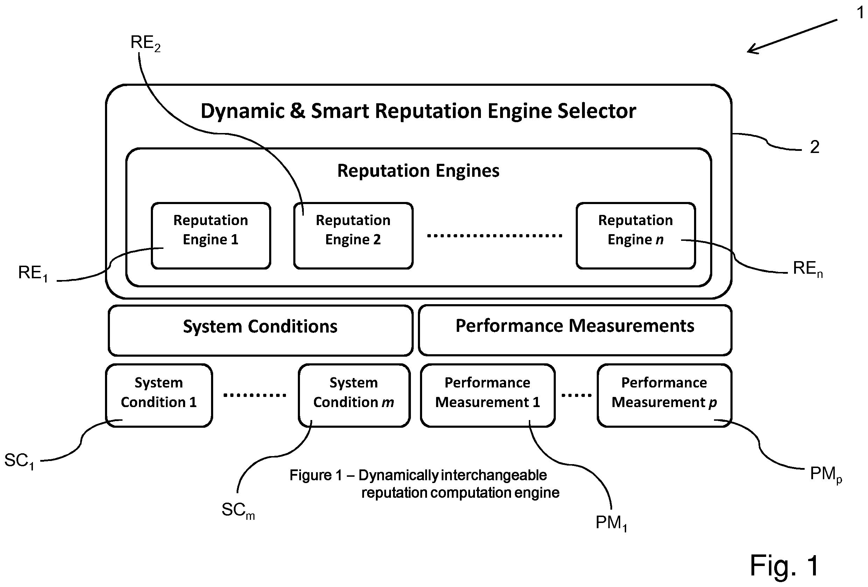

Fig. 1 shows a schematic view of a system according to a first embodiment.

In Fig. 1 reference number 1 denotes a system for determining a reputation mechanism. The system 1 comprises a selection entity 2 for selecting at least one out of a plurality of reputation engines, denoted with references signs $RE_1$, $RE_2$, ... $RE_n$. The system conditions are represented by system condition parameters $SC_1$, ... $SC_m$. The system performance is represented by different system performance parameters $PM_1$, ... $PM_p$. The selection entity 2 selects the most appropriate reputation engine $RE_1$, $RE_2$ ... $RE_n$ according to the current conditions $SC_1$, ... $SC_m$ of the system, for example in terms of number of users, number of feedbacks, available bandwidth, available storage capacity or the like as well as according to a desired performance by evaluating the measured system performance parameters $PM_1$, ... $PM_p$, for example accuracy, user's satisfaction, adaptability, resilience to certain attacks, or the like.

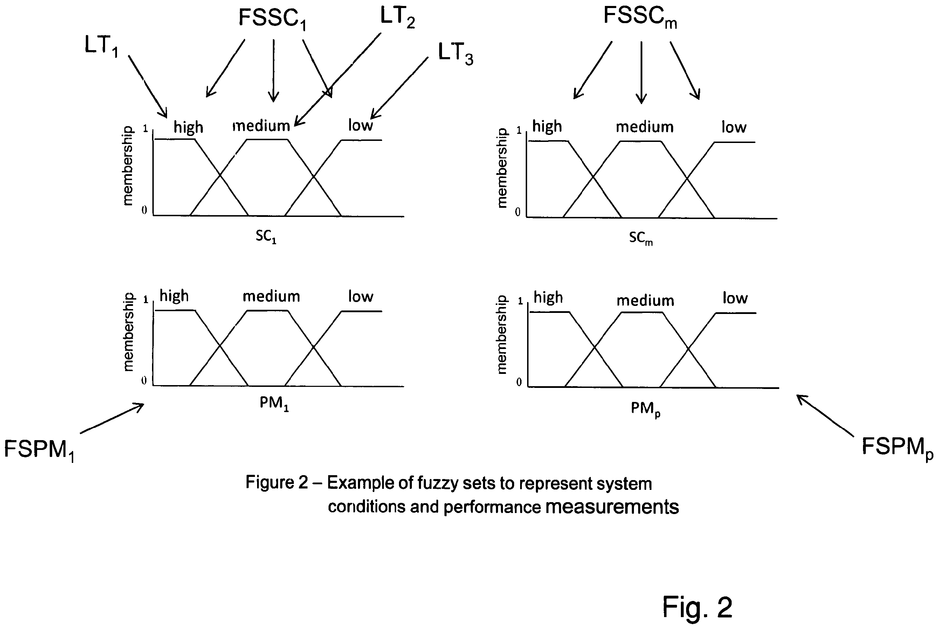

Fig. 2 shows examples of fuzzy sets to represent system conditions and performance measurements of a system according to a second embodiment.

In Fig. 2 are shown examples of fuzzy sets to represent system conditions and performance measurements. The selection entity 2 uses several separate membership functions and a fuzzy set for each system condition $SC_1$, ... $SC_m$ and for each performance measurement $PM_1$, ... $PM_p$. The fuzzy sets $FSSC_1$, ... $FSSC_m$ for the system condition and the fuzzy sets $FSPM_1$, ... $FSPM_p$ for the performance measurement comprise each linguistic terms $LT_1$, $LT_2$, $LT_3$, in particular in Fig. 2 the linguistic terms "low", "medium" and "high", and these are defining particular ranges. The corresponding membership functions map the values for the specific system condition parameters $SC_1$, ... $SC_m$ and the measured specific system performance parameters $PM_1$, ... $PM_p$ to the corresponding fuzzy sets $FSSC_1$, ... $FSSC_m$, $FSPM_1$, ... $FSPM_p$ and further to the linguistic terms $LT_1$, $LT_2$, $LT_3$ forming the fuzzy sets $FSSC_1$, ... $FSSC_m$, $FSPM_1$, ... $FSPM_p$.

The selection entity 2 now gets a set of labels, representing the current condition and the current performance of the system, for instance such a system condition may indicates the number of users being "low" and the user participation is classified as "medium", etc.. The selection entity 2 then determines according to this provided information the suitability of each of the reputation engines $RE_1$, $RE_2$, ..., $RE_p$ as a value between 0 and 1 in such a way that the sum of all these values is equal to 1. These values now represent the probability of a use of each reputation engine $RE_1$, $RE_2$, ..., $RE_p$ for calculating a reputation score:

$$f(SC_1, SC_2, ..., SC_m, PM_1, PM_2, ..., PM_p) = (p_{RE_1}, p_{RE_2}, ..., p_{RE_n})$$

where $SC_i$ represents the i-th system condition, $PM_j$ represents the j-th performance measurement, $RE_k$ represents the k-th reputation engine and $P_{RE_k}$ the probability of choosing this reputation engine as the current applied one. Moreover, as mentioned before:

$$\sum_{k=1}^{n} p_{RE_k} = 1$$

is satisfied.

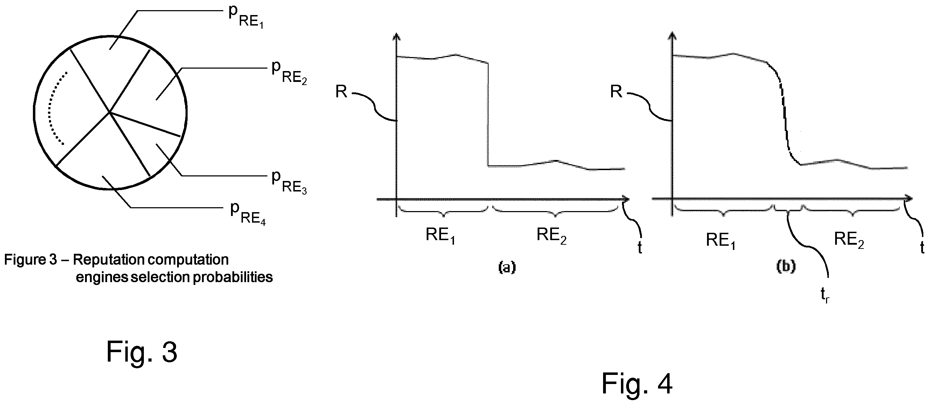

Fig. 3 shows reputation engine selection probabilities.

Fig. 3 shows an example of how the probabilities of the reputation engines $RE_1$, $RE_2$, ... $RE_n$ may look like: the probability for reputation engine $p_{RE_1}$ to be chosen by the selection entity 2 is equal to the probability of reputation engine $p_{RE_2}$ and the probability for selecting reputation engine $p_{RE_4}$. The probability for reputation engine $p_{RE_3}$ is smaller than those for reputation engines $RE_1$, $RE_2$ and $RE_4$.

Fig. 4a, 4b show a transition from a first reputation engine to a second reputation engine.

In Fig. 4a an abrupt change in a computed reputation score R is shown over time t when a new reputation engine, here $RE_2$, is selected and the reputation score R was previously calculated by reputation engine $RE_1$. Such a change or transition between two different reputation engines $RE_1$, $RE_2$ may be required, if a probability of a current reputation engine decreases below a pre-given threshold level, or when certain system condition and/or certain performance parameters change too fast and/or too much.

Fig. 4b shows a "smooth" transition of the reputation score R when changing the reputation engine from reputation engine $RE_1$ to reputation engine $RE_2$. In order to achieve this smooth transition, once the reputation engine exchange has been triggered by the selection entity 2 the complete transition will be prolonged for a certain transition time $t_T$. If the reputation engine $RE_1$ is the current reputation engine and reputation engine $RE_2$ is the selected reputation engine to replace the current reputation engine $RE_1$, during the transition time $t_T$ the reputation score R will be computed, taking into account the outputs respectively the reputation scores $R_{RE_1}$, $R_{RE_2}$ from both reputation engines $RE_1$, $RE_2$ by weighing them: the calculated reputation R is then be calculated in the following way:

$$R_{transition\_time} = C_1 \cdot R_{RE_1} + C_2 \cdot R_{RE_2}$$

These weighing coefficients $C_1$ and $C_2$ which fulfill $C_1 + C_2 = 1$ will be dynamically adapted in a manner that at the beginning of the transition time $t_T$ the first weighing coefficient $C_1$ is equal to 1 and the second weighing coefficient $C_2$ is equal to 0 and at the end of the transition time the first weighing coefficient $C_1$ is 0 and the second weighing coefficient is 1.

The transition time $t_T$ may be also adapted meaning shortened or extended according to system conditions and/or performance measurements.

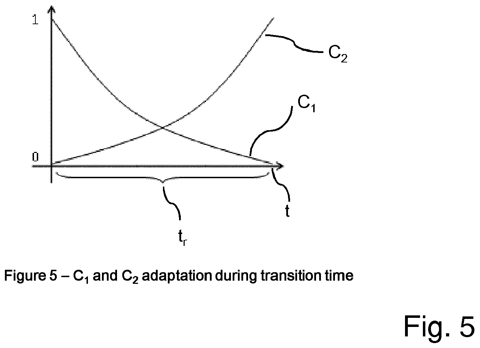

Fig. 5 shows an adaption of weighing coefficients during a transition time.

In Fig. 5 is shown a steady non - linear decrease of weighing coefficient $C_1$ from the beginning of the transition time $t_T$ from 1 to 0 at the end of the transition time $t_T$ and the steady increase of the weighing coefficient $C_2$ starting at the value of 0 at the beginning of the transition time $t_T$ to a value of 1 at the end of the transition time $t_T$. The weighing coefficient $C_1$ is decreased in the same portion as the second weighing coefficient $C_2$ is increased so that $C_1 + C_2 = 1$ is fullfilled. Both weighing coefficients $C_1$, $C_2$ and the duration of the transition time $t_T$ may also be adapted in particular according to system conditions and/or system performance.

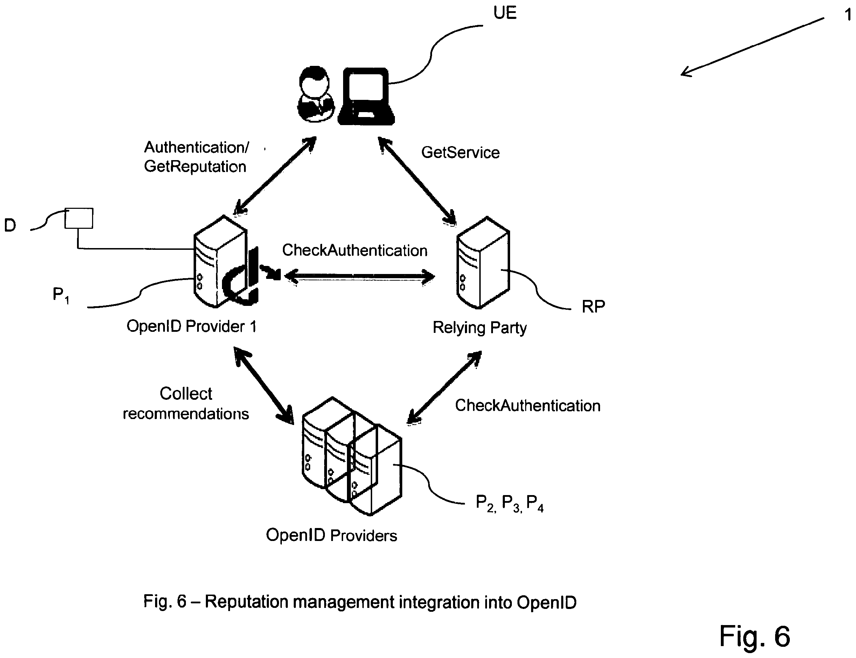

Fig. 6 shows a system according to a second embodiment.

In Fig. 6 a system 1 is shown with a relying party RP, different open ID providers $P_1$, $P_2$, $P_3$, $P_4$, and a user UE.

If the user UE wants to get access to a certain service, the user UE may contact a relying party RP. However, the user UE would like to clarify if the relying party RP is trustworthy. The user UE therefore authenticates with a first Open ID provider $P_1$ to request a reputation for the relying party RP from its open ID provider $P_1$. The Open ID provider $P_1$ collects recommendations for the relying party RP from for example other Open ID providers $P_2$, $P_3$, $P_4$ each identifying the relying party RP by authentication. The other Open ID providers $P_2$, $P_3$, $P_4$ may further collect recommendations for the identified relying party RP by other users connected to the other open ID providers $P_2$, $P_3$, $P_4$. To calculate a reputation score of the relying party RP the Open ID provider $P_1$ - as already mentioned - collects the recommendations for the relying party of the other Open ID providers $P_2$, $P_3$, $P_4$ and may store the collected recommendations in a database D connected to the Open ID provider $P_1$. The Open ID provider $P_1$ may then calculate a reputation score of the target relying party RP by one of the following four models: The first model calculates or computes an average for the reputation score R

$$R \quad (RP) = \alpha \left( \frac{1}{n} \sum_{i=1}^{n} Rec_{u_i} \right) + \beta \left( \frac{1}{m} \sum_{i=1}^{m} Rec_{op_i} \right)$$

where R(RP) is reputation score of the target relying party RP,
$\alpha$ is weight of the user's recommendations
$\beta$ is weight of the OpenID Provider recommendation
n is number of user recommendations
m is number of OpenID Provider recommendations
$Rec_{u_i}$ is aggregation of recommendations given by the *i*-th user
$Rec_{op_i}$ is last recommendation given by the *i*-th OpenID Provider

The second model calculates a weighted average for the reputation score

$$R \quad (RP)_t = \alpha \left( \frac{\sum_{i=1}^{n} w_{u_{i,t}} \cdot Rec_{u_i}}{\sum_{i=1}^{n} w_{u_{i,t}}} \right) + \beta \left( \frac{\sum_{i=1}^{n} w_{op_{i,t}} \cdot Rec_{op_i}}{\sum_{i=1}^{n} w_{op_{i,t}}} \right)$$

where

R(RP)t is reputation score of the target relying party RP, at time $t$,

$w_{u_{i,t}} = f(w_{u_{i,t-1}}, |Rep - Rec_{u_i}|)$ is a weight given to $Rec_{u_i}$ at time $t$,

$w_{op_{i,t}} = f(w_{op_{i,t-1}}, |Rep - Rec_{op_i}|)$ is a weight given to $Rec_{op_i}$, at time $t$,

The third model calculates a preferences weighted average

$$R_i(RP)_{j,t} = \alpha \left( \frac{\sum_{i=1}^n w_{u_{i,t}} \cdot sim_{i,j} \cdot Rec_{u_i}}{\sum_{i=1}^n w_{u_{i,t}} \cdot sim_{i,j}} \right) + \beta \left( \frac{\sum_{i=1}^n w_{op_{i,t}} \cdot Rec_{op_i}}{\sum_{i=1}^n w_{op_{i,t}}} \right)$$

where

$R(RP)_j$, t is reputation score of the target relying party RP, at time t, customized for user j,

$sim_{i,j} = \sigma(pref_i, pref_j)$ is representing a similarity between users $i$ and $j$, based on the similarity between their service provision preferences (delivery time, quality, price, etc).

The forth model calculates a users weighted average

$$R(RP)_{j,t} = \alpha \left( \frac{\sum_{i=1}^n w_{u_{i,j,t}} \cdot Rec_{u_i}}{\sum_{i=1}^n w_{u_{i,j,t}}} \right) + \beta \left( \frac{\sum_{i=1}^n w_{op_{i,j,t}} \cdot Rec_{op_i}}{\sum_{i=1}^n w_{op_{i,j,t}}} \right)$$

where

$w_{u_{i,j,t}} = f(w_{u_{i,j,t-1}}, |Rec_{u_i} - Rec_{u_j}|)$ is a weight given by user $j$ to $Rec_{u_i}$ at time $t$, and

$w_{op_{i,j,t}} = f(w_{op_{i,j,t-1}}, |Rec_{op_i} - Rec_{u_j}|)$ is a weight given by user $j$ to $Rec_{op_i}$ at time $t$

After calculation of the reputation score R(RP) of the target relying party RP according to one of the afore mentioned models, the user UE gets the reputation score R(RP) for the relying party RP from the Open ID provider $P_1$ and may decide, if the relying party RP is trustworthy to get or receive the requested service.

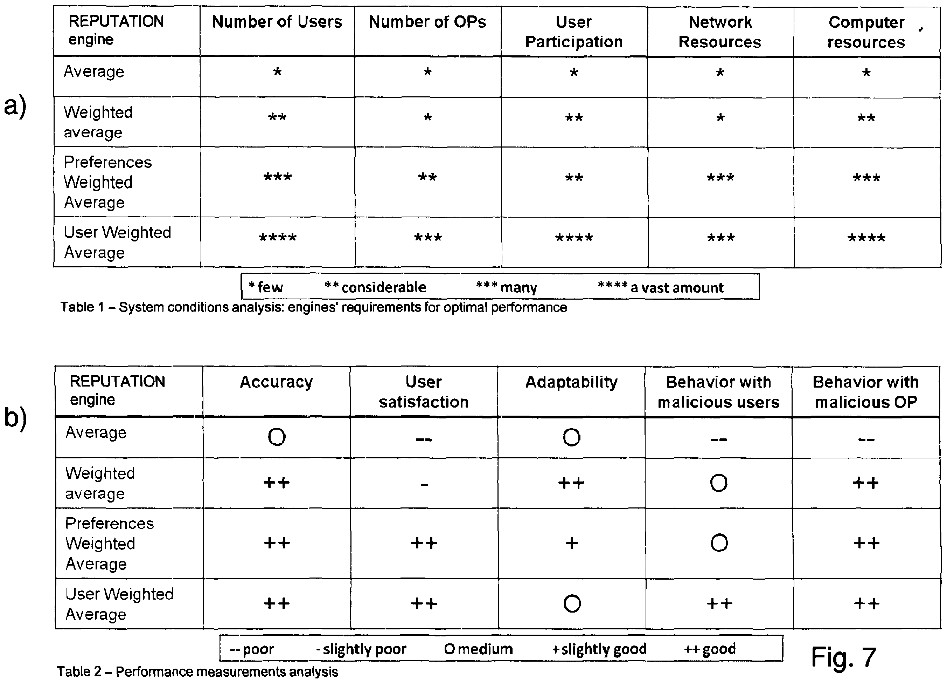

Fig. 7a shows different reputation mechanisms in corresponding reputation engines with system condition analysis. Fig. 7b shows different reputation mechanisms in different reputation engines with performance measurement analysis.

Beforehand the aforementioned four models for a reputation mechanism and calculated on a reputation engine have been analyzed to certain system conditions and performance measurements which are laid down in Fig. 7a for system conditions and in Fig. 7b for performance measurements. For example if the reputation score is calculated by the reputation engine with the reputation mechanism based on the average model, this model is suitable for a few number of users, a few number of Open ID providers, few user participation, few network resources and few computer resources.

The weighted average reputation mechanism is suitable for a considerable number of users, for a few number of Open ID providers, for considerable user participation, for few network resources and considerable computer resources.

The preferences weighted average reputation mechanism is suitable for many users, for a considerable number of Open ID providers, considerable user participation, many network resources and many computer resources.

The user weighted average reputation mechanism is suitable for a vast amount of users, many Open ID providers, a vast amount of user participation, many network resources and a vast amount of computer resources.

The calculation of the reputation score with a reputation engine based on the average reputation mechanism has medium accuracy, poor user satisfaction, medium adaptability, poor behavior with malicious users and poor behavior with malicious Open ID providers.

The weighted average reputation mechanism has good accuracy, slightly poor user satisfaction, a good adaptability, medium behavior with malicious users but good behavior with malicious Open ID providers.

The reputation mechanism based on the preferences weighted average has good accuracy, good user's satisfaction, slightly good adaptability, medium behavior with malicious users but good behavior with malicious Open ID providers.

The user weighted average reputation mechanism has good accuracy and good user satisfaction as well as good behavior with malicious users and malicious Open ID providers but medium adaptability.

In summary the present invention provides a system and a method to dynamically and smartly select the most appropriate reputation engine in particular by making use of fuzzy sets according to the current system conditions and expected performance measurements. The present invention provides a resource consumption adaption and optimization by applying the most suitable trust and reputation model at each moment. The present invention further provides an improvement and optimization of the performance of trust and reputation management models applied at each moment. Even further the present invention provides a smooth transition between different reputation engines avoiding abrupt changes when selecting a new reputation engine. The present invention enhances trust and reputation systems in such a way that they can be dynamically adapted to the system conditions depending also on the targeted performance metrics. The present invention avoids designing and developing tunable trust and reputation models for each specific scenario but provides rather models having a high performance and a certain configuration of system conditions and/or performance measurements. The present invention further enhances end user experience in the trust and reputation management systems by means of applying the best performing reputation model at each moment.

**Claims**

1. A system (1) for determining a reputation mechanism, comprising at least two reputation engines ($RE_1$, $RE_2$, ... $RE_n$) each operable to determine a reputation score (R) of a system entity according to a reputation mechanism, a selection entity (2) for selecting one of the at least two reputation engines ($RE_1$, $RE_2$, ... $RE_n$), a condition entity for measuring a condition ($SC_1$, ... $SC_m$) of the system (1) according to at least one system condition parameter and for providing corresponding condition information, wherein the system condition parameter represents a number of entities ($P_1$, $P_2$, $P_3$, $P_4$, UE, RP) and/or users of the system, a number of providers ($P_1$, $P_2$, $P_3$, $P_4$,) a user and/or entity participation, network resources and/or computer resources, a performance entity for measuring a performance ($PM_1$, ... $PM_p$) of the system (1) according to at least one system performance parameter, and for providing corresponding performance information, wherein the system performance parameter represents accuracy of a calculated reputation score by a reputation engine ($RE_1$, $RE_2$, ... $RE_n$), user satisfaction, adaptability, behaviour with malicious users and/or entities, and/or behaviour with malicious providers, wherein said selection entity (2) is operable to select a reputation engine ($RE_1$, $RE_2$, ... $RE_n$) out of the at least two reputation engines ($RE_1$, $RE_2$, ... $RE_n$) based on a value representing a suitability of the reputation engines, said value being calculated based on actual provided condition information and/or actual provided performance information.

2. The system according to claim 1, **characterized in that** the condition entity is operable to provide system condition and/or the performance entity is operable to provide system performance information based on at least one fuzzy set ($FSSC_1$, ... $FSSC_m$; $FSPM_1$, $FSPM_p$).

3. The system according to one of the claims 1-2, **characterized in that** the selection entity (2) is operable to perform a transition from a first reputation engine ($RE_1$) to a second reputation engine ($RE_2$) during a transition time ($t_T$).

4. The system according to one of the claims 1-3, **characterized in that** the selection entity (2) is operable to use a weighing coefficient ($C_1$, $C_2$) for each of the reputation scores (R) determined by the first and second reputation engine ($RE_1$, $RE_2$) when changing from the first reputation engine ($RE_1$) to the second reputation engine ($RE_2$).

5. The system according to claims 3-4, **characterized in that** the selection entity (2) is operable to adapt at least one of

    - the weighing coefficients ($C_1$, $C_2$) during the transition time ($t_T$)
    - the weighing coefficients ($C_1$, $C_2$) dependant on actual provided condition information and/or actual provided performance information
    - the transition time ($t_T$) dependant on actual provided condition information and/or actual provided performance information .

6. The system according to one of the claims 1-5, **characterized in that** the measured system performance and/or the measured system condition is stored in a database (D).

7. The system according to claim 6, **characterized in that** the reputation engine information is based on at least one fuzzy set ($FSSC_1$, $FSSC_m$, $FSPM_1$, ... , $FSPM_p$).

8. A method for determining a reputation mechanism, comprising the steps of

a) Measuring a performance of the system (1) according to at least one system performance parameter and for providing corresponding performance information, wherein the system performance parameter represents accuracy of a calculated reputation score by a reputation engine ($RE_1$, $RE_2$, ... $RE_n$), user satisfaction, adaptability, behaviour with malicious users and/or entities, and/or behaviour with malicious providers, and/or measuring a condition of the system (1) according to at least one system condition parameter and for providing corresponding condition information, wherein the system condition parameter represents a number of entities ($P_1$, $P_2$, $P_3$, $P_4$, UE, RP) and/or users of the system, a number of providers ($P_1$, $P_2$, $P_3$, $P_4$,) a user and/or entity participation, network resources and/or computer resources and

b) Selecting a reputation engine ($RE_1$, $RE_2$, ... $RE_n$) out of the at least two reputation engines ($RE_1$, $RE_2$, ... $RE_n$) based on a value representing a suitability of the reputation engines, said value being calculated based on actual provided condition information and/or actual provided performance information.

9. The method according to claim 8, **characterized in that** step a) is based on at least one fuzzy set ($FSSC_1$, ... $FSSC_m$; $FSPM_1$, ... $PSPM_p$) for providing corresponding performance information and/or for providing corresponding condition information.

10. The method according to one of the claims 8-9, **characterized in that** a measured system performance and/or measured system condition value ($SC_1$, ... $SC_m$; $PM_1$, ... $PM_p$) is mapped via a membership function to a fuzzy set ($FSSC_1$, ... $FSSC_m$; $FSPM_1$, ... $PSPM_p$) representing a linguistic value ($LT_1$, $LT_2$, $LT_3$).

11. The method according to one of the claims 8-10, **characterized in that** a transition between a first and second reputation engine ($RE_1$, $RE_2$) is performed during a transition time ($t_T$).

12. The method according to one of the claims 8-11, **characterized in that** during the transition time ($t_T$) a weighing coefficient ($C_1$, $C_2$) for each of the reputation scores determined by the first and second reputation engine ($RE_1$, $RE_2$) is used for determining a reputation score.

13. The method according to claims 8-12, **characterized in that**

- the weighing coefficients ($C_1$, $C_2$) are adapted during the transition time ($t_T$), and/or that
- the weighing coefficients ($C_1$, $C_2$) are adapted dependant on actual provided condition information and/or actual provided performance information and/or that
- the transition time ($t_T$) is adapted dependant on actual provided condition information and/or actual provided performance information .

**Patentansprüche**

1. System (1) zum Bestimmen eines Reputationsmechanismus, umfassend zumindest zwei Reputationsmaschinen ($RE_1$, $RE_2$, ... $RE_n$), wobei jede ausgebildet ist, eine Reputationszahl (R) einer Systementität gemäß einem Reputationsmechanismus zu bestimmen,
eine Auswahlentität (2) zum Auswählen von einer der zumindest zwei Reputationsmaschinen ($RE_1$, $RE_2$, ... $RE_n$),
eine Zustandsentität zum Messen eines Zustands ($SC_1$, ... $SC_m$) des Systems (1) gemäß zumindest einem Systemzustandsparameter und zum Bereitstellen von entsprechender Zustandsinformation, wobei der Systemzustandsparameter eine Anzahl von Entitäten ($P_1$, $P_2$, $P_3$, $P_4$, UE, RP) und/oder Nutzern des Systems, eine Anzahl von Anbietern ($P_1$, $P_2$, $P_3$, $P_4$), eine Nutzer- und/oder Entitätsteilnahme, Netzwerkressourcen und/oder Computerressourcen repräsentiert,
eine Leistungsentität zum Messen einer Leistung ($PM_1$, ... $PM_p$) des Systems (1) gemäß zumindest einen Systemleistungsparameter und zum Bereitstellen von entsprechender Leistungsinformation, wobei der Systemleistungsparameter die Genauigkeit der berechneten Reputationszahl durch eine Reputationsmaschine ($RE_1$, $RE_2$, ... $RE_n$), Nutzerzufriedenheit, Anpassbarkeit, Verhalten mit bösartigen Nutzern und/oder Entitäten und/oder Verhalten mit bösartigen Anbietern repräsentiert, wobei
die Auswahlentität (2) ausgebildet ist zum Auswählen einer Reputationsmaschine ($RE_1$, $RE_2$, ... $RE_n$) aus den zumindest zwei Reputationsmaschinen ($RE_1$, $RE_2$, ... $RE_n$) basierend auf einem Wert, der die Eignung der Reputationsmaschinen repräsentiert, wobei der Wert basierend auf aktuellen bereitgestellten Zustandsinformationen und/oder aktuellen bereitgestellten Leistungsinformationen basiert.

2. System gemäß Anspruch 1, **dadurch gekennzeichnet, dass** die Zustandsentität ausgebildet ist, den Systemzustand bereitzustellen und/oder die Leistungsentität ausgebildet ist zum Bereitstellen von Systemleistungsinformationen basierend auf zumindest einer mehrwertigen Menge (FSSC$_1$, ... FSSC$_m$; FSPM$_1$, FSPM$_p$).

3. System gemäß einem der Ansprüche 1-2, **dadurch gekennzeichnet, dass** die Auswahlentität (2) ausgebildet ist, einen Übergang durchzuführen von einer ersten Reputationsmaschine (RE$_1$) zu einer zweiten Reputationsmaschine (RE$_2$) während einer Übergangszeit (t$_T$).

4. System gemäß einem der Ansprüche 1-3, **dadurch gekennzeichnet, dass** die Auswahlentität (2) ausgebildet ist, einen Gewichtungskoeffizienten (C$_1$, C$_2$) für jede der Reputationszahlen (R) zu benutzen, die von der ersten und zweiten Reputationsmaschine (RE$_1$, RE$_2$) bestimmt werden, wenn von der ersten Reputationsmaschine (RE$_1$) zu der zweiten Reputationsmaschine (RE$_2$) gewechselt wird.

5. System gemäß einem der Ansprüche 3-4, **dadurch gekennzeichnet**, das die Auswahlentität (2) ausgebildet ist, zumindest einen

   - der Gewichtungskoeffizienten (C$_1$, C$_2$) während der Übergangszeit (t$_T$),
   - der Gewichtungskoeffizienten (C$_1$, C$_2$) abhängig von aktuellen bereitgestellten Zustandsinformationen und/oder aktuellen bereitgestellten Leistungsinformationen,
   - die Übergangszeit (t$_T$) in Abhängigkeit von aktuellen bereitgestellten Zustandsinformationen und/oder aktuellen Leistungsinformationen,
   - anzupassen.

6. System gemäß einem der Ansprüche 1-5, **dadurch gekennzeichnet, dass** die gemessene Systemleistung und/oder der gemessene Systemzustand in einer Datenbank (D) gespeichert ist.

7. System gemäß Anspruch 6, **dadurch gekennzeichnet, dass** die Reputationsmaschineninformation auf zumindest einer mehrwertigen Menge (FSSC$_1$, FSSC$_m$, FSPM$_1$ ... FSPM$_p$) basiert.

8. Verfahren zum Bestimmen eines Reputationsmechanismus, umfassend die Schritte

   a) Messen der Leistung des Systems (1) gemäß zumindest einen Systemleistungsparameter und zum Bereitstellen von entsprechender Leistungsinformation, wobei der Systemleistungsparameter die Genauigkeit einer berechneten Reputationszahl durch eine Reputationsmaschine (RE$_1$, RE$_2$, ... RE$_n$), Nutzerzufriedenheit, Anpassbarkeit, Verhalten mit bösartigen Nutzern und/oder Entitäten und/oder Verhalten mit bösartigen Anbietern, repräsentiert, und/oder Messen eines Zustands des Systems (1) gemäß zumindest einem Systemzustandsparameter und zum Bereitstellen von entsprechender Zustandsinformation, wobei der Systemzustandsparameter eine Anzahl von Entitäten (P$_1$, P$_2$, P$_3$, P$_4$, UE, RP) und/oder Nutzern des Systems, eine Anzahl von Anbietern (P$_1$, P$_2$, P$_3$, P$_4$), eine Nutzer- und/oder Entitätsteilnahme, Netzwerkressourcen und/oder Computerressourcen repräsentiert,
   b) Auswählen einer Reputationsmaschine (RE$_1$, RE$_2$, ... RE$_n$) aus den zumindest zwei Reputationsmaschinen (RE$_1$, RE$_2$, ... RE$_n$) basierend auf einem Wert, der die Eignung der Reputationsmaschinen repräsentiert, wobei der Wert basierend auf aktuellen bereitgestellten Zustandsinformationen und/oder aktuellen bereitgestellten Leistungsinformationen basiert.

9. System gemäß Anspruch 8, **dadurch gekennzeichnet, dass** Schritt a) zumindest auf einer mehrwertigen Menge (FSSC$_1$, ... FSSC$_m$; FSPM$_1$ ... PSPM$_p$) basiert zum Bereitstellen entsprechender Leistungsinformation und/oder zum Bereitstellen entsprechender Zustandsinformation.

10. System gemäß einem der Ansprüche 8-9, **dadurch gekennzeichnet, dass** eine gemessene Systemleistung und/oder ein gemessener Systemzustandswert (SC$_1$, ... SC$_m$; PM$_1$ ... PM$_p$) abgebildet wird mittels einer Teilnahmefunktion auf eine mehrwertige Menge (FSSC$_1$, ... FSSC$_m$; FSPM$_1$ ... PSPM$_p$), die einen linguistischen Wert (LT$_1$, LT$_2$, LT$_3$) repräsentiert.

11. System gemäß einem der Ansprüche 8-10, **dadurch gekennzeichnet, dass** ein Übergang zwischen einer ersten und einer zweiten Reputationsmaschine (RE$_1$, RE$_2$) während einer Übergangszeit (t$_T$) durchgeführt wird.

12. System gemäß einem der Ansprüche 8-11, **dadurch gekennzeichnet, dass** während der Übergangszeit (t$_T$) ein Gewichtungskoeffizient (C$_1$, C$_2$) für jede der Reputationszahlen, der durch die erste und zweite Reputationsmaschine

($RE_1$, $RE_2$) ermittelt wird, benutzt wird, um eine Reputationszahl zu ermitteln.

13. System gemäß einem der Ansprüche 8-12, **dadurch gekennzeichnet, dass**

   - die Gewichtungskoeffizienten ($C_1$, $C_2$) während der Übergangszeit ($t_T$) angepasst werden, und/oder
   - die Gewichtungskoeffizienten ($C_1$, $C_2$) abhängig von aktuellen bereitgestellten Zustandsinformationen und/oder aktuellen bereitgestellten Leistungsinformationen angepasst werden, und/oder
   - die Übergangszeit ($t_T$) in Abhängigkeit von aktuellen bereitgestellten Zustandsinformationen und/oder aktuellen bereitgestellten Leistungsinformationen, angepasst wird.

**Revendications**

1. Système (1) pour déterminer un mécanisme de réputation, comprenant
   au moins deux moteurs de réputation ($RE_1$, $RE_2$,... $RE_n$) pouvant chacun fonctionner pour déterminer un score de réputation (R) d'une entité de système selon un mécanisme de réputation,
   une entité de sélection (2) pour sélectionner l'un des au moins deux moteurs de réputation ($RE_1$, $RE_2$,... $RE_n$) ,
   une entité de condition pour mesurer une condition ($SC_1$, ... $SC_m$) du système (1) selon au moins un paramètre de condition de système et pour fournir des informations de condition correspondantes, dans lequel le paramètre de condition de système représente un certain nombre d'entités ($P_1$, $P_2$, $P_3$, $P_4$, UE, RP) et/ou d'utilisateurs du système, un certain nombre de fournisseurs ($P_1$, $P_2$, $P_3$, $P_4$,), une participation d'un utilisateur et/ou d'une entité, des ressources réseau et/ou des ressources informatiques,
   une entité de performance pour mesurer une performance ($PM_1$, ... $PM_p$) du système (1) selon au moins un paramètre de performance de système, et pour fournir des informations de performance correspondantes, dans lequel le paramètre de performance de système représente une précision d'un score de réputation calculé par un moteur de réputation ($RE_1$, $RE_2$,... $RE_n$), un niveau de satisfaction d'un utilisateur, une adaptabilité, un comportement avec des utilisateurs et/ou des entités malveillant(e)s, et/ou un comportement avec des fournisseurs malveillants, dans lequel
   ladite entité de sélection (2) peut fonctionner pour sélectionner un moteur de réputation ($RE_1$, $RE_2$,... $RE_n$) dans les au moins deux moteurs de réputation ($RE_1$, $RE_2$,... $RE_n$) sur la base d'une valeur représentant une aptitude des moteurs de réputation, ladite valeur étant calculée sur la base d'informations de condition réelle fournies et/ou d'informations de performance réelle fournies.

2. Système selon la revendication 1, **caractérisé en ce que** l'entité de condition peut fonctionner pour fournir une condition de système et/ou l'entité de performance peut fonctionner pour fournir des informations de performance de système sur la base d'au moins un ensemble flou ($FSSC_1$, ... $FSSC_m$ ; $FSPM_1$, $FSPM_p$) .

3. Système selon l'une des revendications 1 ou 2, **caractérisé en ce que** l'entité de sélection (2) peut fonctionner pour effectuer une transition d'un premier moteur de réputation ($RE_1$) à un second moteur de réputation ($RE_2$) pendant un temps de transition ($t_T$) .

4. Système selon l'une des revendications 1 à 3, **caractérisé en ce que** l'entité de sélection (2) peut fonctionner pour utiliser un coefficient de pondération ($C_1$, $C_2$) pour chacun des scores de réputation (R) déterminés par les premier et second moteurs de réputation ($RE_1$, $RE_2$) lors du passage du premier moteur de réputation ($RE_1$) au second moteur de réputation ($RE_2$).

5. Système selon les revendications 3 à 4, **caractérisé en ce que** l'entité de sélection (2) peut fonctionner pour adapter au moins l'un parmi

   - les coefficients de pondération ($C_1$, $C_2$) pendant le temps de transition ($t_T$)
   - les coefficients de pondération ($C_1$, $C_2$) en fonction d'informations de condition réelle fournies et/ou d'informations de performance réelle fournies
   - le temps de transition ($t_T$) en fonction d'informations de condition réelle fournies et/ou d'informations de performance réelle fournies.

6. Système selon l'une des revendications 1 à 5, **caractérisé en ce que** la performance de système mesurée et/ou la condition de système mesurée est/sont stockée(s) dans une base de données (D).

**7.** Système selon la revendication 6, **caractérisé en ce que** les informations de moteur de réputation sont basées sur au moins un ensemble flou ($FSSC_1$, $FSSC_m$, $FSPM_1$, ..., $FSPM_p$) .

**8.** Procédé pour déterminer un mécanisme de réputation, comprenant les étapes consistant à

a) mesurer une performance du système (1) selon au moins un paramètre de performance de système et pour fournir des informations de performance correspondantes, dans lequel le paramètre de performance de système représente une précision d'un score de réputation calculé par un moteur de réputation ($RE_1$, $RE_2$,... $RE_n$), un niveau de satisfaction d'un utilisateur, une adaptabilité, un comportement avec des utilisateurs et/ou des entités malveillant(e)s, et/ou un comportement avec des fournisseurs malveillants, et/ou mesurer une condition du système (1) selon au moins un paramètre de condition de système et pour fournir des informations de condition correspondantes, dans lequel le paramètre de condition de système représente un certain nombre d'entités ($P_1$, $P_2$, $P_3$, $P_4$, UE, RP) et/ou d'utilisateurs du système, un certain nombre de fournisseurs ($P_1$, $P_2$, $P_3$, $P_4$,), une participation d'un utilisateur et/ou d'une entité, des ressources réseau et/ou des ressources informatiques et

b) sélectionner un moteur de réputation ($RE_1$, $RE_2$,... $RE_n$) dans les au moins deux moteurs de réputation ($RE_1$, $RE_2$,... $RE_n$) sur la base d'une valeur représentant une aptitude des moteurs de réputation, ladite valeur étant calculée sur la base d'informations de condition réelle fournies et/ou d'informations de performance réelle fournies.

**9.** Procédé selon la revendication 8, **caractérisé en ce que** l'étape a) est basée sur au moins un ensemble flou ($FSSC_1$, ... $FSSC_m$ ; $FSPM_1$, ... $PSPM_p$) pour fournir des informations de performance correspondantes et/ou pour fournir des informations de condition correspondantes.

**10.** Procédé selon l'une des revendications 8 à 9, **caractérisé en ce qu'**une valeur de performance de système mesurée et/ou condition de système mesurée ($SC_1$, ... $SCm$ ; $PM_1$, ... $PM_p$) est mappée via une fonction d'appartenance à un ensemble flou ($FSSC_1$, ... $FSSC_m$ ; $FSPM_1$, ... $PSPM_p$) représentant une valeur linguistique ($LT_1$, $LT_2$, $LT_3$) .

**11.** Procédé selon l'une des revendications 8 à 10, **caractérisé en ce qu'**une transition entre des premier et second moteurs de réputation ($RE_1$, $RE_2$) est effectuée pendant un temps de transition ($t_T$).

**12.** Procédé selon l'une des revendications 8 à 11, **caractérisé en ce que** pendant le temps de transition ($t_T$) un coefficient de pondération ($C_1$, $C_2$) pour chacun des scores de réputation déterminés par les premier et second moteurs de réputation ($RE_1$, $RE_2$) est utilisé pour déterminer un score de réputation.

**13.** Procédé selon les revendications 8 à 12, **caractérisé en ce que**

- les coefficients de pondération (C1, C2) sont adaptés pendant le temps de transition ($t_T$), et/ou **en ce que**
- les coefficients de pondération (C1, C2) sont adaptés en fonction d'informations de condition réelle fournies et/ou d'informations de performance réelle fournies et/ou **en ce que**
- le temps de transition ($t_T$) est adapté en fonction d'informations de condition réelle fournies et/ou d'informations de performance réelle fournies.

Figure 1 – Dynamically interchangeable reputation computation engine

Fig. 1

EP 2 813 046 B1

Figure 2 – Example of fuzzy sets to represent system
conditions and performance measurements

Fig. 2

EP 2 813 046 B1

Fig. 4

Figure 3 – Reputation computation
engines selection probabilities

Fig. 3

Figure 5 – $C_1$ and $C_2$ adaptation during transition time

Fig. 5

EP 2 813 046 B1

Fig. 6 – Reputation management integration into OpenID

Fig. 6

EP 2 813 046 B1

a)

| REPUTATION engine | Number of Users | Number of OPs | User Participation | Network Resources | Computer resources |
|---|---|---|---|---|---|
| Average | * | * | * | * | * |
| Weighted average | ** | * | ** | * | ** |
| Preferences Weighted Average | *** | ** | ** | *** | *** |
| User Weighted Average | **** | *** | **** | *** | **** |

| * few      ** considerable      *** many      **** a vast amount |
|---|

Table 1 – System conditions analysis: engines' requirements for optimal performance

b)

| REPUTATION engine | Accuracy | User satisfaction | Adaptability | Behavior with malicious users | Behavior with malicious OP |
|---|---|---|---|---|---|
| Average | O | -- | O | -- | -- |
| Weighted average | ++ | - | ++ | O | ++ |
| Preferences Weighted Average | ++ | ++ | + | O | ++ |
| User Weighted Average | ++ | ++ | O | ++ | ++ |

| -- poor      - slightly poor      O medium      + slightly good      ++ good |
|---|

Table 2 – Performance measurements analysis

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7937480 B2

**Non-patent literature cited in the description**

- Using Reputation to Augment Explicit Authorization. **PHILIP J. WINDLEY ; DEVLIN DALEY ; BRYANT CUTLER ; KEVIN TEW.** proceedings of the 2007 ACN workshop and digital IT management. ACN, 2007, 271-281

- **FÉLIX GOMEZ MÁRMOL ; GREGORIO MARTINEZ PEREZ.** Towards Pre-Standardization of Trust and Reputation Models for Distributed and Heterogeneous Systems. *Computer Standards & Interfaces,* 2010, vol. 32, 185-196